Europäisches Patentamt

European Patent Office

Office européen des brevets

(11) Publication number: **0 192 886**
**B1**

(12) **EUROPEAN PATENT SPECIFICATION**

(45) Date of publication of patent specification: **03.01.90**

(21) Application number: **85308252.7**

(22) Date of filing: **13.11.85**

(51) Int. Cl.⁵: **G 01 F 15/00,** G 01 F 15/06,
G 01 F 15/14

(54) Assembly of a commodity meter.

(30) Priority: **31.01.85 GB 8502388**

(43) Date of publication of application:
**03.09.86 Bulletin 86/36**

(45) Publication of the grant of the patent:
**03.01.90 Bulletin 90/01**

(84) Designated Contracting States:
**AT BE DE FR GB IT NL SE**

(56) References cited:
**DE-A-2 756 215**
**DE-B-2 442 100**
**GB-A-2 010 596**

(73) Proprietor: **SMITH METERS LIMITED**
**170, Rowan Road**
**Streatham Vale London, SW16 5JE (GB)**

(72) Inventor: **Michaelides, Constantine**
**205, Portland Crescent**
**Stanmore Middlesex, HA7 1LF (GB)**
Inventor: **Pye, Alfred Edward**
**20, Selbourne Avenue**
**Tolworth Surrey, KT6 7NS (GB)**
Inventor: **Osmond, Graham Trevor**
**47, Vale Road**
**Mitcham Surrey, CR4 1NP (GB)**

(74) Representative: **Betteridge, Eileen Margaret**
**170, Rowan Road**
**Streatham Vale London, SW16 5JE (GB)**

Courier Press, Leamington Spa, England.

## Description

This invention relates to the assembly of a commodity meter and to a meter adapted for assembly by the new assembly method.

Commodity meters of the kind to which the invention relates comprise top cover and bottom casing members, the bottom casing member having a measuring mechanism, the top casing cover member containing a drive path from the measuring mechanism via a magnetic coupling through the wall of the top casing cover member to an index mounted outside the wall. In such meters there have been found problems of assembly because when the casing cover member is in position on the meter, access to the drive path to make the final connection is not possible, but the drive path cannot be completed before the casing cover member is in place because the drive path passes through the casing cover member wall.

According to the invention, there is disclosed a commodity meter of the kind comprising a measuring mechanism inside a closed casing, an index mounted on the outside of a casing cover member and a drive path from the measuring mechanism to the index having a magnetic coupling for transferring drive through the casing cover member characterized by the provision of a clutch mechanism in the drive path within the casing cover member, the clutch mechanism comprising a driven part connected to the magnetic coupling and a driving part connected to the measuring mechanism and having a retractable member movable between an engaged position in which it engages the driven part and a retracted position in which the clutch is disengaged and means for placing said retractable member in its engaged position when the measuring mechanism is first operated.

The invention also extends to the method of assembling a commodity meter as set out above, in which the retractable member is moved into its retracted position until after the casing cover member is assembled to the meter, whereon operation of the measuring mechanism places the retractable member in its engaged position, so engaging the clutch.

A specific embodiment of the invention is shown in the accompanying drawings, in which:—

Figure 1 is a side section through a magnetic drive assembly of a gas meter, and

Figure 2 is an exterior view of part of the assembly of Figure 1.

A gas meter, part of which only is shown, comprises reciprocating diaphragms, the movements of which are translated into a rotational movement of a shaft (11) through a gear box (12). A meter casing (13, 30) is, in use, full of gas so that the casing must be carefully sealed. However, the rotation of the shaft needs to be carried through the casing wall into an index housing (14) attached to the meter, without allowing gas to escape. For this purpose a magnetic coupling transfers drive across the wall without the need for a mechanical connection. Magnetic couplings for this purpose are shown also in our U.K. Patent No. 2010596. In the present arrangement, there is a deeply cup-shaped insert (15) secured in the casing wall. The two magnets (16, 16') co-operating to transfer the drive are annular in shape, one encircling the cup-shaped insert and the other seated inside the insert. The outer magnet (16) is required to rotate with shaft (11) through a clutch mechanism described hereinafter. The inner magnet (16') is secured to rotate with an index and counter mechanism (not shown) within the index housing (14).

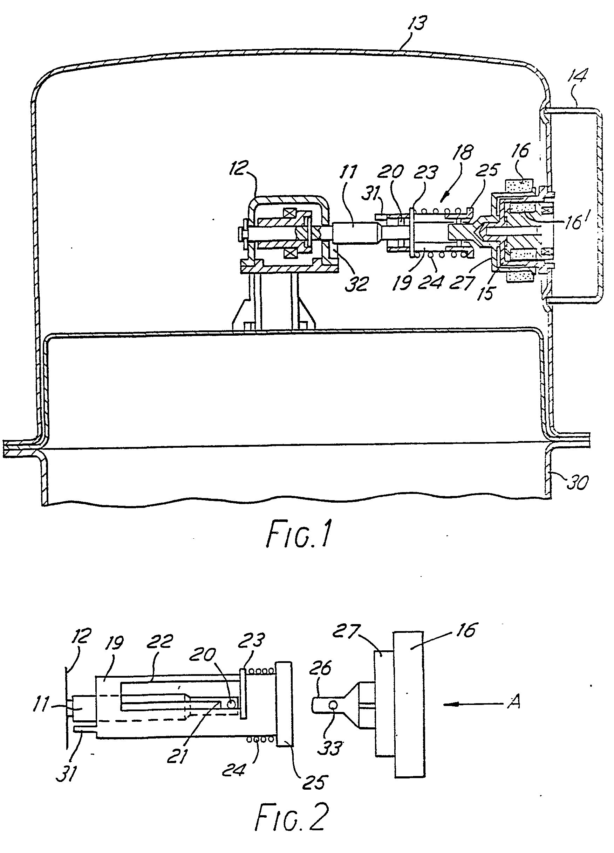

With previous mechanisms of this kind there have been found problems of assembly. The gear box (12) and shaft (11) are mounted as shown in the drawing on interior structure of the meter, while the magnet (16) of necessity is mounted on the casing cover member (13). Clearly when the casing cover member (13) is being placed in position on the meter, no direct access is possible to the shaft (11) to connect it to drive the magnet. This problem is met in the presently described embodiment by a clutch mechanism (18) shown engaged in Figure 1 and disengaged in Figure 2.

The clutch mechanism comprises a cylinder (19) formed of a plastics material, and having a bore in which is entered a smaller diameter end of shaft (11). Near its free end shaft (11) has a pair of opposed radially-extending pins (20). The bore of the cylinder (19) has for part of its length slots in which the pins slide, the slots ending in shoulders (21) such that the cylinder can be pushed onto the shaft to the position shown in Figure 2, then turned until the pins (20) engage behind the shoulders (21), thus retaining the cylinder in that position. A pair of windows (22) in the cylinder allow the pins to be seen and also provide a mounting for an end stop (23), which extends diametrically across the bore and radially out from the windows. A coil spring (24) is located between the end stop (23) and a shoulder (25) formed at the end of cylinder (19). In assembly, when the cylinder is placed into the position of Figure 2, the coil spring (24) is compressed and held compressed by the engagement of the pins (20) on shoulders (21). A finger (31) extending from the cylinder (19) toward the gearbox just clears the surface of the gearbox when the pins (20) are engaged.

In this position, as seen in Figure 2, the cylinder (19) is spaced from an engagement spigot (26) forming part of a mounting (27) for the outer magnet (16). The spigot (26), mounting (27) and magnet (16) are assembled together on the casing cover member (13). The shaft (11) and cylinder (19) are assembled on the gearbox (12), with the cylinder (19) in the retracted position shown in Figure 2. There is no connection between the two assemblies at this stage. The casing cover member (13) is placed over the gearbox and sealed onto a bottom casing member (30). An index mechanism is then mounted on the casing cover member (13) and covered by index housing (14). The meter is thus fully assembled, but has no connection between the gearbox and the index mechanism.

In order to test and calibrate the meter it has to be subjected to flow tests in which gas is passed through the meter. When placed on test the shaft (11) begins to rotate in a clockwise direction as viewed in the direction of arrow A. The cylinder (19) rotates with the shaft (11) until the finger (31) engages a stationary trip (32) on the gearbox casing. The cylinder is then prevented from rotation. Further movement of shaft (11) moves pins (20) off the shoulders (21) thus releasing spring (24) which urges the cylinder (19) rightward as seen in the Figures to engage the spigot (26) as seen in Figure 1. Spigot (26) has two diametrically opposed pins (33), which drivingly engage the interior bore of cylinder (19). The bore is shaped at the end of the cylinder into a squared section, the pins engaging across the corners of the square.

As the cylinder (19) moves rightward the pins (20) engage again in the slots in the bore so forming a driving engagement between the shaft (11) and the cylinder. The cylinder movement also withdraws the path of the finger (31) from the trip (32).

Thus the action of placing the meter on test causes the clutch to be engaged and the index mechanism connected without any other step being required. The index mechanism commences operation on connection, indicating that the clutch has been successfully engaged.

## Claims

1. A commodity meter of the kind comprising a measuring mechanism inside a closed casing (13, 30), an index (14) mounted on the outside of a casing cover member (13) and a drive path from the measuring mechanism to the index having a magnetic coupling (16, 16') for transferring drive through the casing cover member (13), characterized by the provision of a clutch mechanism (18) in the drive path within the casing cover member (13), the clutch mechanism comprising a driven part (26) connected to the magnetic coupling (16, 16') and a driving part (19, 24) connected to the measuring mechanism and having a retractable member (19) movable between an engaged position in which it engages the driven part (26) and a retracted position in which the clutch is disengaged and means (31) for placing said retractable member in its engaged position when the measuring mechanism is first operated.

2. A commodity meter as claimed in Claim 1, further characterized by said retractable member (19) comprising a cylinder (19) slidable on a shaft (11) of the driving part and urged into the engaged position by a spring (24).

3. A commodity meter as claimed in Claim 2, further characterized by said cylinder (19) having slots engaged by pins (20) extending radially from said shaft (11), said slots ending in shoulders (21) behind which the pins (20) may engage to hold the cylinder retracted.

4. A commodity meter as claimed in Claim 3, further characterized by said cylinder (19) having a finger (31) extending so that when the cylinder (19) is retracted the finger (31) engages stationary structure of the meter whereby rotation of the cylinder (19) is stopped and continuing rotation of shaft (11) removes pins (20) from shoulders (21).

5. A method of assembling a commodity meter as claimed in any of Claims 1 to 4, characterized by the steps of connecting the driven part (26) of the clutch mechanism (18) to the magnetic coupling (16, 16'), connecting the driving part (19, 24) of the clutch mechanism to the measuring mechanism, connecting the driven part (26) to a wall of casing cover member (13), moving a retractable member (19) of the clutch into a retracted position in which the clutch is disengaged, assembling the casing cover member (13) to the meter and driving the measuring mechanism so operating means (31) for placing said retractable member (19) in an engaged position in which the clutch is engaged.

## Patentansprüche

1. Artikelmeßgerät, umfassend einen Meßmechanismus innerhalb eines geschlossenen Gehäuses (13, 30), einen auf der Außenseite eines Gehäusedeckelelementes (13) montierten Index (14) und einen Antriebsweg von dem Meßmechanismus zu dem Index mit einer magnetischen Kupplung (16, 16') zum übertragen des Antriebs durch das Gehäusedeckelelement (13), dadurch gekennzeichnet, daß in dem Antriebsweg innerhalb des Gehäusedeckelelementes ein Kupplungsmechanismus (18) vorgesehen ist, wobei der Kupplungsmechanismus ein mit der magnetischen Kupplung (16, 16') verbundenes angetriebenes Teil (26) und ein mit dem Meßmechanismus verbundenes antreibendes Teil (19, 24) umfaßt und ein zurückziehbares Element (19) aufweist, das zwischen einer eingekuppelen Position, in der es in das angetriebene Teil (26) eingreift, und einer zurückgezogenen Position, in der die Kupplung ausgekuppelt ist, bewegt wird, und eine Vorrichtung (31) zum Positionieren des genannten zurückziehbaren Elements in seiner eingekuppelten Position, wenn der Meßmechanismus zum ersten Mal betätigt wird.

2. Artikelmeßgerät nach Anspruch 1, weiter dadurch gekennzeichnet, daß das genannte zurückziehbare Element (19) einen Zylinder (19) umfaßt, der über eine Welle (11) des angetriebenen Teils geschoben und durch eine Feder (24) in die eingekuppelte Position gedrängt wird.

3. Artikelmeßgerät nach Anspruch 2, weiter dadurch gekennzeichnet, daß der genannte Zylinder (19) Schlitze aufweist, in die radial von der genannten Welle verlaufende Stifte (20) eingreifen, wobei die genannten Schlitze in Schultern (21) enden, hinter denen die Stifte (20) eingreifen können, um den Zylinder in der zurückgezogenen Position zu halten.

4. Anzeigemeßgerät nach Anspruch 3, weiter dadurch gekennzeichnet, daß der genannte Zylinder (19) einen Finger (31) aufweist, der so verläuft, daß der Finger (31) bei zurückgezogenem Zylinder in die feststehende Struktur des Meßgeräts eingreift, wodurch die Drehung des Zylinders (19) gestoppt wird und bei einer weiteren Drehung der Welle (11) die Stifte (20) von den Schultern (21) entfernt werden.

5. Verfahren zum Zusammenbauen eines Anzeigemeßgeräts nach einem der Ansprüche 1 bis 4, gekennzeichnet durch die folgenden Schritte: Verbinden des angetriebenen Teils (26) des Kupplungsmechanismus (18) mit der magnetischen Kupplung (16, 16'), Verbinden des angetriebenen Teils (19, 24) des Kupplungsmecahnismus mit dem Meßmechanismus, Verbinden des angetriebenen Teils (26) mit einer Wand des Gehäusedeckelelements (13), Bewegen eines zurückgezogenen Elements (19) der Kupplung in eine zurückgezogene Position, in der die Kupplung ausgekuppelt ist, Zusammenbauen des Gehäusedeckelelementes (13) und des Meßgeräts und Antrieben des Meßmechanismus, um so die Vorrichtung (31) zum Positionieren des genannten zurückziehbaren Elements (19) in einer eingekuppelten Position zu betätigen, in der die Kupplung eingekuppelt ist.

## Revendications

1. Un compteur dont la conception comporte un mécanisme de mesure situé à l'intérieur d'une enveloppe fermée (13, 30), une aiguille (14) montée sur la face externe d'un élément de recouvrement d'enveloppe (13) et une ligne d'entraînement entre le mécanisme de mesure et l'aiguille munie d'un couplage magnétique (16, 16') destiné à faire passer l'entraînement par l'élément de recouvrement d'enveloppe (13); cette conception se caractérisera aussi par un mécanisme d'embrayage (18) intégré à la ligne d'entraînement à l'intérieur de l'élément de recouvrement d'enveloppe (13), le mécanisme d'embrayage comportant une partie menée (26) reliée au couplage magnétique (16, 16') et une partie motrice (19, 24) reliée au mécanisme de mesure, ainsi qu'un élément rétractable (19) lequel peut se déplacer entre une position engagée—et dans ce cas, il s'engrène avec la partie menée (26)—et une position rétractée—et dans ce cas l'embrayage est désengagé—de même qu'un dispositif (31) permettant de placer l'élément rétractable dans sa position engagée lorsque le mécanisme de mesure est actionné pour la première fois.

2. Un compteur, dont la spécification correspond à l'énoncé 1, caractérisé en outre par un élément rétractable (19), qui est mentionné ci-dessus, et qui comporte un cylindre (19) coulissant sur un axe (11) au niveau de la partie motrice et est forcé dans la position engagée par un ressort (24).

3. Un compteur, dont la spécification correspond à l'énoncé 2, caractérisé en outre par un cylindre (19), qui est mentionné ci-dessus, dans les fentes duquel viennent s'engager des broches (20) s'étendant radialement à partir de l'axe (11) mentionné ci-dessus; les fentes aboutissent à des épaulements (21) derrière lesquels les broches (20) peuvent s'engager pour maintenir le cylindre en position rétractée.

4. Un compteur, dont la spécification correspond à l'énoncé 3, caractérisé en outre par un le cylindre (19), qui est mentionné ci-dessus, comportant un doigt (31) lequel peut s'étendre de telle sorte que, lorsque le cylindre (19) est rétracté, le doigt (31) s'engage dans la structure fixe du compteur, ce qui empêche le cylindre (19) de tourner et la rotation continue de l'axe (11) enlève les broches (20) au niveau des épaulements (21).

5. La méthode d'assemblage d'un compteur, dont la spécification correspond à l'un quelconque des énoncés 1 à 4, se caractérisé par les étapes suivantes: raccordement de la partie menée (26) du mécanisme d'embrayage (18), au couplage magnétique (16, 16'); raccordement de la partie motrice (19, 24) du mécanisme d'embrayage au mécanisme de mesure; raccordement de la partie menée (26) à une paroi de l'élément de recouvrement d'enveloppe (13); déplacement d'un élément rètractable (19) de l'embrayage en une position rétractée, dans laquelle l'embrayage est désengagé; montage de l'élément de recouvrement d'enveloppe (13) sur le compteur et entraînement du mécanisme de mesure actionnant le dispositif (31) destiné à mettre l'élément rétractable (19) en position engagée dans laquelle l'embrayage est embrayé.

FIG.1

FIG.2